# EUROPÄISCHE PATENTANMELDUNG

(11) **EP 3 715 989 A1**
(43) Veröffentlichungstag der Anmeldung: **30.09.2020**
(21) Anmeldenummer: 19166079.4
(22) Anmeldetag: 29.03.2019
(51) Int. Cl.: G05B 23/02, G05B 19/042, G05B 19/418, G05B 19/4065, B23Q 17/00, G06N 3/02

(54) **VERFAHREN UND VORRICHTUNG ZUR ÜBERWACHUNG EINES FRÄSPRO-ZESSES**

(71) Anmelder: Siemens Aktiengesellschaft, 80333 München (DE)
(72) Erfinder: Ochsenfeld, Henning, 90491 Nürnberg (DE); Pettigrew, Liam, 91052 Erlangen (DE); Reimann, Thorsten, 91052 Erlangen (DE)

(57) **Zusammenfassung**

Fräsmaschine (1) und Verfahren zum Fräsen eines Werkstückes (W) mit einem drehbaren Fräskopf (2) zur Bearbeitung des Werkstückes (W) in einem Fräsprozess, einem Elektromotor (3) zum Antreiben des Fräskopfes (2) und mit einem künstlichen Intelligenzmodul (4), das während des Fräsprozesses auf Basis einer erfassten Rotationsgeschwindigkeit des Fräskopfes (2) und mindestens eines weiteren Betriebsparameters der Fräsmaschine (1), insbesondere eines Versorgungsstromes des Elektromotors (3), Anomalien des Fräsprozesses erkennt.

## Beschreibung

Die Erfindung betrifft ein Verfahren und eine Vorrichtung zur Überwachung eines Fräsprozesses mittels künstlicher Intelligenz.

Fräsen ist allgemein ein spanendes Fertigungsverfahren zur Herstellung von Werkstücken mit geometrisch bestimmter Gestalt. Beim Fräsen wird Material entfernt, indem das Fräswerkzeug bzw. Fräskopf mit hoher Geschwindigkeit um seine eigene Achse rotiert, während entweder das Fräswerkzeug selbst die herzustellende Kontur an dem Werkstück abfährt oder das Werkstück entsprechend relativ zu dem Fräskopf bewegt wird. Fräsmaschinen können zum Fräsen unterschiedlicher Werkstücke verwendet werden, insbesondere auch zum Fräsen von Leiterplatten (Printed Circuit Boards). Beispielsweise können durch Fräsen Trennlinien zwischen Leiterbahnflächen einer Leiterplatte hergestellt werden. Während des Fräsprozesses kann eine hohe Menge an Staub entstehen, sodass die Frässpindel nach einer gewissen Betriebszeit steckenbleiben kann. Bei herkömmlichen Fräsmaschinen werden derartige Fehler bzw. Ausfälle erst detektiert, nachdem der jeweilige Fehler, beispielsweise das Blockieren der Frässpindel, aufgetreten ist. Ein Ausfall einer Fräsmaschine während eines Fräsprozesses kann zu einer wesentlichen Verzögerung des Fertigungsprozesses des herzustellenden Objektes führen. Darüber hinaus stellt das in diesem Herstellungsschritt nicht fertiggestellte Werkstück in vielen Fällen ein Ausschussprodukt dar und kann nicht weiterverarbeitet werden. Ein Stillstand einer Fräsmaschine während eines laufenden Herstellungsprozesses erfordert den unverzüglichen Einsatz von Wartungspersonal bzw. Servicetechnikern zur Ausführung der Wartungs- bzw. der Reparaturmaßnahmen. In vielen Fällen sind derartige Servicetechniker nicht sofort verfügbar und müssen angefordert werden. Dies kann zum zeitweisen Stillstand einer ganzen Produktionslinie innerhalb einer Fabrik führen.

Es ist daher eine Aufgabe der vorliegenden Erfindung, ein Verfahren und eine Vorrichtung zur Überwachung eines Fräsprozesses zu schaffen, welche mögliche Ausfälle aufgrund einer betroffenen Fräsmaschine frühzeitig vorhersagt, sodass rechtzeitig Gegenmaßnahmen getroffen werden können.

Diese Aufgabe wird erfindungsgemäß gemäß einem ersten Aspekt der Erfindung durch ein Verfahren zur Überwachung eines Fräsprozesses mit den in Patentanspruch 1 angegebenen Merkmalen gelöst.

Die Erfindung schafft demnach ein Verfahren zur Überwachung eines Fräsprozesses mit den Schritten:
Erfassen einer Rotationsgeschwindigkeit eines Fräskopfes einer Fräsmaschine und mindestens eines weiteren Betriebsparameters der Fräsmaschine während des Fräsprozesses und Auswerten der erfassten Rotationsgeschwindigkeit und des erfassten Betriebsparameters durch einen trainierten lernfähigen Algorithmus zur Erkennung von Anomalien während des Fräsprozesses.

Mithilfe des erfindungsgemäßen Verfahrens kann die Produktivität der Fräsmaschine deutlich gesteigert werden. Ungewollte Stillstandzeiten der Fräsmaschine werden verhindert. Weiterhin kann die Qualität der in dem Fräsprozess hergestellten Produkte bzw. Zwischenprodukte gesteigert werden.

Bei einer möglichen Ausführungsform des erfindungsgemäßen Verfahrens weist der weitere Betriebsparameter einen elektrischen Versorgungsstrom zum Betreiben der Fräsmaschine auf.

Dieser Betriebsparameter bietet den Vorteil, dass er relativ einfach mit geringem technischem Aufwand erfasst werden kann.

Bei einer weiteren möglichen Ausführungsform des erfindungsgemäßen Verfahrens wird nach Erkennung von Anomalien ein Hinweis für den Betreiber der Fräsmaschine generiert und auf einer Anzeigeeinheit der Fräsmaschine in Echtzeit angezeigt.

Bei einer weiteren möglichen Ausführungsform des erfindungsgemäßen Verfahrens werden nach Erkennung von Anomalien Wartungsmaßnahmen automatisch eingeleitet.

Hierdurch werden Betriebsstillstandzeiten weiter minimiert.

Bei einer weiteren möglichen Ausführungsform des erfindungsgemäßen Verfahrens wird nach Erkennung von Anomalien während des Fräsprozesses eine Ausfallwahrscheinlichkeit und/oder ein voraussichtlicher Ausfallzeitraum der Fräsmaschine berechnet.

Hierdurch kann die Produktionsplanung des Herstellungsprozesses optimiert werden.

Bei einer weiteren möglichen Ausführungsform des erfindungsgemäßen Verfahrens wird nach Erkennung von Anomalien während des Fräsprozesses mindestens eine mögliche Ursache für das Auftreten der Anomalien ermittelt.

Dies erlaubt es, Wartungs- bzw. Reparaturmaßnahmen gezielt durchzuführen, sodass Ausfall- bzw. Stillstandzeiten der Fräsmaschine reduziert werden.

Bei einer weiteren möglichen Ausführungsform des erfindungsgemäßen Verfahrens weist der trainierte lernfähige Algorithmus ein trainiertes neuronales Netzwerk auf.

Bei einer weiteren möglichen Ausführungsform des erfindungsgemäßen Verfahrens wird der lernfähige Algorithmus vor Beginn eines Produktionsfräsprozesses auf Grundlage von historischen Trainingsdaten hinsichtlich der Rotationsgeschwindigkeit und dem mindestens einen weiteren Betriebsparameter der Fräsmaschine in einer Trainingsphase trainiert.

Bei einer weiteren möglichen Ausführungsform des erfindungsgemäßen Verfahrens wird der lernfähige Algorithmus als Applikation von einer Datenbank über ein Netzwerk in eine Recheneinheit der Fräsmaschine heruntergeladen und in einer Trainingsphase für den Produktionsfräsprozess trainiert.

Bei einer weiteren möglichen Ausführungsform des erfindungsgemäßen Verfahrens wird der lernfähige Algorithmus in Abhängigkeit eines Typs der Fräsmaschine und/oder eines Typs eines in dem Fräsprozess zu fräsenden Werkstückes selektiert.

Bei einer weiteren möglichen Ausführungsform des erfindungsgemäßen Verfahrens weist das zu fräsende Werkstück eine Leiterplatine auf.

Bei einer weiteren möglichen Ausführungsform des erfindungsgemäßen Verfahrens werden die Rotationsgeschwindigkeit des Fräskopfes der Fräsmaschine und der mindestens eine weitere Betriebsparameter erfasst und entsprechende Daten mit einer Datenrate von etwa 1/sec einem in der Recheneinheit der Fräsmaschine implementierten trainierten lernfähigen Algorithmus zugeführt.

Bei einer weiteren möglichen Ausführungsform des erfindungsgemäßen Verfahrens werden die Anomalien durch den trainierten lernfähigen Algorithmus in Echtzeit während des Produktionsfräsprozesses ermittelt.

Die Erfindung schafft gemäß einem weiteren Aspekt eine Fräsmaschine zum Fräsen eines Werkstückes mit den in Patentanspruch 13 angegebenen Merkmalen.

Die Erfindung schafft demnach eine Fräsmaschine zum Fräsen eines Werkstückes mit
einem drehbaren Fräskopf zur Bearbeitung des Werkstückes in einem Fräsprozess,
einem Elektromotor zum Antreiben des Fräskopfes und mit einem künstlichen Intelligenzmodul, das während des Fräsprozesses auf Basis einer erfassten Rotationsgeschwindigkeit des Fräskopfes und mindestens eines weiteren Betriebsparameters der Fräsmaschine, insbesondere eines Versorgungsstromes des Elektromotors, Anomalien des Fräsprozesses erkennt.

Bei einer weiteren möglichen Ausführungsform der erfindungsgemäßen Fräsmaschine führt das künstliche Intelligenzmodul einen trainierten lernfähigen Algorithmus während des Fräsprozesses aus.

Bei einer weiteren möglichen Ausführungsform der erfindungsgemäßen Fräsmaschine ist das künstliche Intelligenzmodul der Fräsmaschine dazu ausgelegt, bei Erkennung von Anomalien während des Fräsprozesses eine Ausfallwahrscheinlichkeit und/oder einen voraussichtlichen Ausfallzeitraum der Fräsmaschine zu berechnen.

Bei einer weiteren möglichen Ausführungsform der erfindungsgemäßen Fräsmaschine ist das künstliche Intelligenzmodul der Fräsmaschine ferner dazu ausgelegt, mindestens eine mögliche Ursache für das Auftreten der Anomalien während des Fräsprozesses zu ermitteln.

Im Weiteren werden mögliche Ausführungsformen des erfindungsgemäßen Verfahrens und der erfindungsgemäßen Vorrichtung zur Überwachung eines Fräsprozesses unter Bezugnahme auf die beigefügten Figuren näher erläutert.

Es zeigen:
- Fig. 1: ein Ablaufdiagramm zur Darstellung einer möglichen Ausführungsform des erfindungsgemäßen Verfahrens zur Überwachung eines Fräsprozesses;
- Fig. 2: ein Blockdiagramm zur Darstellung eines Ausführungsbeispiels einer erfindungsgemäßen Fräsmaschine;
- Fig. 3: ein Blockdiagramm zur Darstellung einer weiteren möglichen Ausführungsform der erfindungsgemäßen Fräsmaschine.

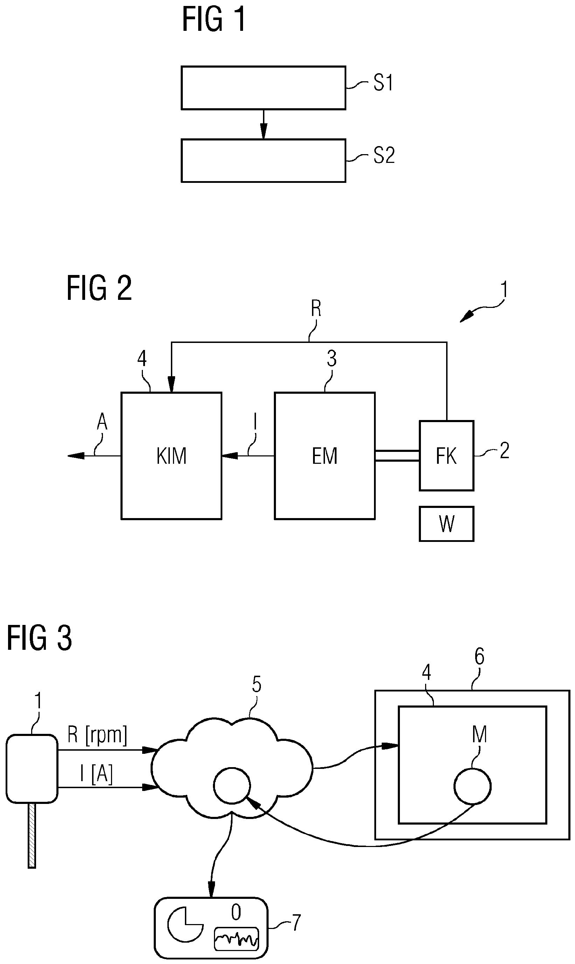

Wie man aus dem Ablaufdiagramm gemäß Fig. 1 erkennen kann, weist das erfindungsgemäße Verfahren zur Überwachung eines Fräsprozesses bei der dargestellten Ausführungsform zwei Hauptschritte auf.

In einem ersten Schritt S1 wird eine Rotations- bzw. Drehgeschwindigkeit eines Fräskopfes 2 einer Fräsmaschine 1 erfasst. Weiterhin wird im Schritt S1 mindestens ein weiterer Betriebsparameter der Fräsmaschine 1 während des Fräsprozesses erfasst. Dieser weitere Betriebsparameter weist beispielsweise einen elektrischen Versorgungsstrom zum Betreiben der Fräsmaschine 1 auf. Dieser elektrische Versorgungsstrom dient beispielsweise zur Versorgung eines Elektromotors 3, welcher den Fräskopf 2 der Fräsmaschine 1 antreibt.

In einem weiteren Schritt S2 wird die erfasste Rotationsgeschwindigkeit R und der erfasste Betriebsparameter, insbesondere der elektrische Versorgungsstrom I, durch einen trainierten lernfähigen Algorithmus zur Erkennung von Anomalien A während des Fräsprozesses ausgewertet.

In einem weiteren möglichen Schritt (nicht dargestellt in Fig. 1) wird nach Erkennung von Anomalien ein Hinweis für den Betreiber der Fräsmaschine 1 generiert. Beispielsweise können auf einer Anzeigeeinheit der Fräsmaschine 1 in Echtzeit erkannte Anomalien angezeigt werden. Weiterhin können in einem weiteren Schritt automatisch Wartungsmaßnahmen zur Behebung möglicher Ursachen der erkannten Anomalien A automatisch eingeleitet werden. Nach Erkennung von Anomalien während des Fräsprozesses im Schritt S2 wird bei einer möglichen Ausführungsform eine Ausfallwahrscheinlichkeit oder ein voraussichtlicher Ausfallszeitraum der betreffenden Fräsmaschine 1 berechnet. Mögliche Wartungsmaßnahmen können auf die berechnete Ausfallwahrscheinlichkeit und/oder den voraussichtlichen Ausfallzeitraum abgestimmt werden. Beispielsweise werden Fräsmaschinen 1 mit einer hohen Ausfallwahrscheinlichkeit mit einer hohen Dringlichkeit bzw. Priorität gewartet bzw. repariert. Weiterhin kann auf Grundlage der berechneten voraussichtlichen Ausfallzeiträume gesteuert werden, welche Wartungsmaßnahmen an welchen Fräsmaschinen 1 in welchem Zeitraum durchgeführt werden. Bei einer weiteren möglichen Ausführungsform des erfindungsgemäßen Verfahrens wird nach Erkennung von Anomalien während des Fräsprozesses mindestens eine mögliche Ursache für das Auftreten der Anomalien A ermittelt, beispielsweise ein Verschleiß oder Blockieren einer Antriebsspindel. Bei einer möglichen Ausführungsform weist der trainierte lernfähige Algorithmus, welcher zur Erkennung von Anomalien verwendet wird, ein trainiertes neuronales Netzwerk NN auf. Ein lernfähiger Algorithmus, insbesondere das neuronale Netzwerk NN, wird vorzugsweise vor Beginn eines Produktionsfräsprozesses auf Grundlage von historischen Trainingsdaten hinsichtlich der Rotationsgeschwindigkeit R und dem mindestens einen weiteren Betriebsparameter P der Fräsmaschine 1 in einer Trainingsphase trainiert. Das trainierte neuronale Netzwerk NN weist bei einer möglichen Ausführungsform ein RNN (Recurrent Neural Network) auf.

Der zum Erkennen der Anomalien verwendete lernfähige Algorithmus kann bei einer möglichen Ausführungsform als Applikation (App) von einer Datenbank über ein Netzwerk in eine Recheneinheit der Fräsmaschine 1 heruntergeladen und in einer Trainingsphase für den späteren Produktionsfräsprozess trainiert werden. Der verwendete lernfähige Algorithmus kann bei einer möglichen Ausführungsvariante in Abhängigkeit eines Typs der betreffenden Fräsmaschine 1 und/oder eines Typs eines in dem Fräsprozess zu fräsenden Werkstückes W selektiert werden. Bei einer möglichen Ausführungsform weist das durch die Fräsmaschine 1 zu fräsende Werkstück W eine Leiterplatine auf.

Die Erfassung der Rotationsgeschwindigkeit R und des weiteren Betriebsparameters, insbesondere des Versorgungsstromes I, im Schritt S1 erfolgt bei einer möglichen Ausführungsform auf Basis entsprechender Daten, die mit einer Datenrate von etwa 1/sec einem in der Recheneinheit der Fräsmaschine 1 implementierten trainierten lernfähigen Algorithmus zugeführt werden. Die Ermittlung bzw. Erkennung der Anomalien im Schritt S2 durch den trainierten lernfähigen Algorithmus, insbesondere durch ein trainiertes neuronales Netzwerk NN, erfolgt während des Produktionsfräsprozesses vorzugsweise in Echtzeit, d.h. während des Produktionsvorganges.

Fig. 2 zeigt ein Blockschaltbild zur Darstellung einer Ausführungsform einer erfindungsgemäßen Fräsmaschine 1. Die in Fig. 2 dargestellte Fräsmaschine 1 dient zum Fräsen eines Werkstückes W. Bei dem Werkstück W handelt es sich beispielsweise um eine Leiterplatine. Die Fräsmaschine 1 verfügt über mindestens einen drehbaren Fräskopf 2 zur Bearbeitung des Werkstückes W in einem Fräsprozess. Der Fräskopf 2 wird durch einen Elektromotor 3 der Fräsmaschine 1 angetrieben. Hierbei bezieht der Elektromotor 3 einen elektrischen Versorgungsstrom. Der Versorgungsstrom kann eine oder mehrere Stromphasen umfassen (L1, L2, L3). Die erfindungsgemäße Fräsmaschine 1 verfügt über ein künstliches Intelligenzmodul 4, wie in Fig. 2 dargestellt. Das künstliche Intelligenzmodul 4 erkennt während des Fräsprozesses auf Basis einer erfassten Rotationsgeschwindigkeit R des Fräskopfes 2 und mindestens eines weiteren Betriebsparameters P der Fräsmaschine 1 Anomalien, die während des Fräsprozesses auftreten. Das künstliche Intelligenzmodul 4 kann mehrere Betriebsparameter P zur Erkennung von Anomalien A auswerten. Bei einer möglichen Ausführungsform führt das künstliche Intelligenzmodul 4 einen trainierten lernfähigen Algorithmus während des Fräsprozesses aus.

Das künstliche Intelligenzmodul 4 implementiert bei einer möglichen Ausführungsform ein trainiertes neuronales Netzwerk NN mit mehreren Schichten. Das trainierte neuronale Netzwerk NN weist eine Eingangsschicht, eine oder mehrere Zwischenschichten (hidden layers) und eine Ausgangsschicht auf. In jeder Schicht (layer) befinden sich neuronale Knoten mit entsprechenden Aktivierungsfunktionen. Die neuronalen Knoten der verschiedenen Schichten sind miteinander verknüpft, wobei die Verknüpfungen gewichtet sind.

Die Einstellung der Gewichtungsfaktoren w erfolgt in der Trainingsphase. Das künstliche Intelligenzmodul 4 bzw. neuronale Netzwerk kann in dem ablaufenden Fräsprozess weiter trainiert werden. Bei einer möglichen Ausführungsform erfolgt das Training des künstlichen Intelligenzmoduls 4 in einem unüberwachten (unsupervised) Lernprozess. Der Lernprozess erfolgt vorzugsweise auf Grundlage historischer Trainingsdaten. Diese historischen Trainingsdaten umfassen beispielsweise historische Stromversorgungsdaten sowie historische Rotationsgeschwindigkeitsdaten des Fräskopfes 2. Diese historischen Trainingsdaten befinden sich in einem Datenspeicher. Bei einer möglichen Ausführungsform werden die Trainingsdaten von einer Datenbank des Betreibers der Fräsmaschine geladen und zu Trainingszwecken herangezogen.

Der verwendete lernfähige Algorithmus, beispielsweise das verwendete neuronale Netzwerk NN, kann bei einer möglichen Ausführungsform in Abhängigkeit eines Typs der Fräsmaschine 1 und/oder eines Typs eines im Fräsprozess zu fräsenden Werkstückes W selektiert werden. Der lernfähige Algorithmus kann bei einer möglichen Ausführungsform ebenfalls von einer Datenbank in das künstliche Intelligenzmodul 4 der Fräsmaschine 1 heruntergeladen werden. Beispielsweise können Trainingsdaten und geeignete lernfähige Algorithmen über ein Datennetz von einer Cloud-Plattform 6 eines Fräsmaschinenherstellers oder eines Fräsmaschinenbetreibers heruntergeladen werden. Beispielsweise wird ein lernfähiger Algorithmus heruntergeladen, der zur Überwachung eines Fräsprozesses an Leiterplatinen geeignet ist. Bei einer möglichen Ausführungsform liegt an der Eingangsschicht des neuronalen Netzwerkes ein Vektor an, der verschiedene Betriebsparameter P der Fräsmaschine 1 umfasst. Dieser Zustandsvektor z weist beispielsweise zwei Betriebsparameter P auf, insbesondere die Rotationsgeschwindigkeit R des Fräskopfes 2 und den von dem Elektromotor 3 bezogenen elektrischen Strom I. Der Zustandsvektor z, welcher an die Eingangsschicht des neuronalen Netzwerkes NN angelegt wird, kann weitere Betriebsparameter P umfassen, je nach Anwendungsfall. Beispielsweise kann jede Phase L eines mehrphasigen Versorgungsstromes einen Betriebsparameter P darstellen. Als Ausgabewerte kann das künstliche Intelligenzmodul 4 eine berechnete Ausfallwahrscheinlichkeit der Fräsmaschine 1, insbesondere für einen voraussichtlichen Ausfallzeitraum, ausgeben. Über eine Nutzerschnittstelle können zudem erkannte Anomalien A an einen Nutzer der Fräsmaschine 1 in Echtzeit ausgegeben werden. Der Fräsprozess selbst kann bei einer möglichen Ausführungsform durch ein CNC-Programm gesteuert werden, welcher von einem Controller bzw. Mikroprozessor der erfindungsgemäßen Fräsmaschine 1 ausgeführt wird. Während des Fräsprozesses erfolgt eine Vorschubbewegung des Fräskopfes 2 senkrecht oder schräg zur Rotationsachse des Fräskopfes 2. Handelt es sich bei dem Werkstück W um eine Leiterplatine, wird die Fräsmaschine 1 gesteuert durch eine Software bzw. ein CNC-Programm Bahnen generieren, die entlang einer gewünschten Leiterbahn herumführen. Beispielsweise wird die herzustellende Leiterbahn von einem restlichen leitfähigen Material, beispielsweise Kupfer, isoliert. Dies wird auch als Isolationsfräsen bezeichnet. Zum Fräsen von Isolationskanälen kann ein kleiner konischer Fräskopf zum Einsatz kommen, der entlang der berechneten Bewegungsbahnen leitfähiges Material, insbesondere Kupfer, abträgt. Das abgetragene Material kann zu einer Blockierung bzw. einer Beeinträchtigung der Bewegungsfähigkeit des Fräskopfes 2 führen, wobei derartige Auffälligkeiten bzw. Anomalien mithilfe des erfindungsgemäßen Verfahrens frühzeitig erkannt bzw. detektiert werden. Bei einer möglichen Ausführungsform können für verschiedene Anomalien A auch entsprechende Bewertungszahlen berechnet werden, welche das Ausmaß der erkannten Anomalie bzw. die daraus resultierende Ausfallwahrscheinlichkeit angeben. Derartige Anomaliekennzahlen können bei einer möglichen Ausführungsform in Echtzeit über eine Anzeigeeinheit an den Betreiber der Fräsmaschine 1 ausgegeben werden. Mit dem erfindungsgemäßen Verfahren können mögliche Anomalien während des laufenden Fräsprozesses rund um die Uhr erkannt werden und mögliche Fehlerursachen ermittelt werden. Hierdurch können rechtzeitig Reparatur- bzw. Wartungsmaßnahmen an der betreffenden Fräsmaschine 1 eingeleitet bzw. ausgeführt werden, sodass Stillstandzeiten innerhalb des Fräsprozesses weitestgehend vermieden werden. Das erfindungsgemäße Verfahren kann für eine Vielzahl von Fräsmaschinen verwendet werden, die gleichzeitig in einer Produktionslinie zum Einsatz kommen.

Bei der in Fig. 2 dargestellten Ausführungsform ist das künstliche Intelligenzmodul 4 lokal in einer Recheneinheit der Fräsmaschine 1 implementiert. Bei einer alternativen Ausführungsform kann das künstliche Intelligenzmodul 4 auch auf einem entfernten Server einer Cloud-Plattform 6 implementiert sein, welcher über eine Datenverbindung mit einer Steuerung der Fräsmaschine 1 bidirektional kommuniziert. Die technische Datenverbindung umfasst bei einer möglichen Ausführungsform ein lokales Netz bzw. Intranet. Alternativ kann es sich bei der Datenverbindung auch um ein globales Netz bzw. das Internet handeln. Das erfindungsgemäße Verfahren zur Überwachung des Fräsprozesses ist ein computerimplementiertes Verfahren, welches bei einer möglichen Ausführungsform auf einem computerlesbaren Medium gespeichert ist. Das computerlesbare Medium umfasst beispielsweise einen Datenspeicher der Fräsmaschine 1. Weiterhin kann das computerlesbare Medium auch einen tragbaren Datenträger aufweisen, beispielsweise eine CD-ROM oder einen USB-Stick. Je nach Anwendungsfall können bei einer möglichen Ausführungsform verschiedene lernfähige Algorithmen zur Erkennung von Anomalien während des Fräsprozesses eingesetzt werden. Beispielsweise kann eine Supportvektormaschine zur Berechnung eines Qualitätsindikators vorgesehen sein. Bei einer möglichen Ausführungsform sind in der Umgebung des Fräskopfes 2 weitere Sensoren vorgesehen, die zusätzliche Daten an das künstliche Intelligenzmodul 4 liefern. Beispielsweise können Bildsensoren Bilddaten an das künstliche Intelligenzmodul 4 als Eingangsbetriebsparameter P des Zustandsvektors z liefern. Hierdurch kann die Zuverlässigkeit bzw. Genauigkeit des erfindungsgemäßen Verfahrens weiter erhöht werden.

Fig. 3 zeigt schematisch ein weiteres Ausführungsbeispiel der erfindungsgemäßen Vorrichtung zur Überwachung eines Fräsprozesses. Bei dem dargestellten Ausführungsbeispiel liefert die Fräsmaschine 1 über eine Schnittstelle erfasste Betriebsparameter über ein Datennetzwerk bzw. eine Cloud 5 an eine Cloud-Plattform 6, in der ein künstliches Intelligenzmodul 4 integriert ist. Über eine Anzeigevorrichtung 7 können in Echtzeit Anomalien bzw. Hinweise an den Betreiber der Fräsmaschine 1 ausgegeben werden. Die Anzeigevorrichtung 7 ist bei einer möglichen Ausführungsform ebenfalls an das Datennetzwerk bzw. die Cloud 5 angebunden. Bei einer möglichen Ausführungsvariante ist die Anzeigevorrichtung 7 ein tragbares Gerät, beispielsweise ein Smartphone des Nutzers. Mit dem erfindungsgemäßen Verfahren werden frühzeitig Abweichungen in den Merkmalsraum der Betriebsparameter detektiert. Mithilfe eines Datenmodells M können zudem Ursachen für das Auftreten von Anomalien bzw. Ausfällen der Fräsmaschine 1 automatisch ermittelt werden. Dieses Datenmodell M beschreibt vorzugsweise den strukturellen Aufbau der Fräsmaschine 1, beispielsweise als Ontologie. Bei dem in Fig. 3 dargestellten Ausführungsbeispiel werden zwei Merkmale bzw. Betriebsparameter P, nämlich der elektrische Versorgungsstrom I und die Rotationsgeschwindigkeit R, verwendet, um den lernfähigen Algorithmus bzw. das neuronale Netzwerk zu trainieren. Bei einer möglichen Ausführungsform benötigt der trainierte lernfähige Algorithmus einen relativ geringen Speicherplatz von weniger als 10 MB. Dies erlaubt es, den lernfähigen Algorithmus von einer Cloud-Plattform 6 auf einem Automatisierungsgerät zu implementieren. Das erfindungsgemäße Verfahren ist in einer einfachen Weise für eine Vielzahl von Fräsmaschinen 1 skalierbar. Bei einer möglichen Ausführungsform liefert das künstliche Intelligenzmodul 4 Bewertungszahlen der erkannten Anomalien bzw. mögliche Ausfallwahrscheinlichkeiten. Bei einer möglichen Ausführungsform des erfindungsgemäßen Verfahrens erfolgt die Auswertung der Betriebsparameter P mithilfe eines trainierten lernfähigen Algorithmus auf einem Server der Cloud-Plattform 6 auf Grundlage von Betriebsdaten, die von einer oder mehreren Fräsmaschinen über das Netzwerk 5 an den Server der Cloud-Plattform 6 übertragen werden. Der lernfähige Algorithmus kann bei einer möglichen Ausführungsform als Applikation von einer Datenbank heruntergeladen werden und durch das künstliche Intelligenzmodul 4 nach erfolgtem Training ausgeführt werden. Das künstliche Intelligenzmodul 4 kann bei einer möglichen Ausführungsform lokal in der Fräsmaschine 1 vorgesehen sein, wie in Fig. 2 dargestellt, oder entfernt auf einem Server einer Cloud-Plattform 6 implementiert sein, wie in Fig. 3 dargestellt.

## Patentansprüche

1. Verfahren zur Überwachung eines Fräsprozesses mit den Schritten:
(a) Erfassen (S1) einer Rotationsgeschwindigkeit eines Fräskopfes (2) einer Fräsmaschine (1) und mindestens eines weiteren Betriebsparameters der Fräsmaschine (1) während des Fräsprozesses; und
(b) Auswerten (S2) der erfassten Rotationsgeschwindigkeit und des erfassten Betriebsparameters durch einen trainierten lernfähigen Algorithmus zur Erkennung von Anomalien während des Fräsprozesses.

2. Verfahren nach Anspruch 1,
wobei der weitere Betriebsparameter einen elektrischen Versorgungsstrom zum Betreiben der Fräsmaschine (1) aufweist.

3. Verfahren nach Anspruch 1 oder 2,
wobei nach Erkennung von Anomalien ein Hinweis für den Betreiber der Fräsmaschine (1) generiert und auf einer Anzeigeeinheit der Fräsmaschine (1) in Echtzeit angezeigt wird und/oder Wartungsmaßnahmen automatisch eingeleitet werden.

4. Verfahren nach einem der vorangehenden Ansprüche 1 bis 3,
wobei nach Erkennung von Anomalien während des Fräsprozesses eine Ausfallwahrscheinlichkeit und/oder ein voraussichtlicher Ausfallzeitraum der Fräsmaschine (1) berechnet wird.

5. Verfahren nach einem der vorangehenden Ansprüche 1 bis 4,
wobei nach Erkennung von Anomalien während des Fräsprozesses mindestens eine mögliche Ursache für das Auftreten der Anomalien ermittelt wird.

6. Verfahren nach einem der vorangehenden Ansprüche 1 bis 5,
wobei der trainierte lernfähige Algorithmus ein trainiertes neuronales Netzwerk aufweist.

7. Verfahren nach einem der vorangehenden Ansprüche 1 bis 6,
wobei der lernfähige Algorithmus vor Beginn eines Produktionsfräsprozesses auf Grundlage von historischen Trainingsdaten hinsichtlich der Rotationsgeschwindigkeit und dem mindestens einen weiteren Betriebsparameter der Fräsmaschine in einer Trainingsphase trainiert wird.

8. Verfahren nach einem der vorangehenden Ansprüche 1 bis 7,
wobei der lernfähige Algorithmus als Applikation von einer Datenbank über ein Netzwerk in eine Recheneinheit der Fräsmaschine (1) heruntergeladen und in einer Trainingsphase für den Produktionsfräsprozess trainiert wird.

9. Verfahren nach Anspruch 8,
wobei der lernfähige Algorithmus in Abhängigkeit eines Typs der Fräsmaschine (1) und/oder eines Typs eines in dem Fräsprozess zu fräsenden Werkstückes (W) selektiert wird.

10. Verfahren nach Anspruch 9,
wobei das zu fräsende Werkstück (W) eine Leiterplatine aufweist.

11. Verfahren nach einem der vorangehenden Ansprüche 1 bis 10,
wobei die Rotationsgeschwindigkeit des Fräskopfes (2) der Fräsmaschine (1) und der mindestens eine weitere Betriebsparameter erfasst werden und entsprechende Daten mit einer Datenrate von etwa 1/sec einem in der Recheneinheit der Fräsmaschine (1) implementierten trainierten lernfähigen Algorithmus zugeführt werden.

12. Verfahren nach einem der vorangehenden Ansprüche 1 bis 11,
wobei die Anomalien durch den trainierten lernfähigen Algorithmus in Echtzeit während des Produktionsfräsprozesses ermittelt werden.

13. Fräsmaschine (1) zum Fräsen eines Werkstückes (W) mit
- einem drehbaren Fräskopf (2) zur Bearbeitung des Werkstückes (W) in einem Fräsprozess,
- einem Elektromotor (3) zum Antreiben des Fräskopfes (2) und
- mit einem künstlichen Intelligenzmodul (4), das während des Fräsprozesses auf Basis einer erfassten Rotationsgeschwindigkeit des Fräskopfes (2) und mindestens eines weiteren Betriebsparameters der Fräsmaschine (1), insbesondere eines Versorgungsstromes des Elektromotors (3), Anomalien des Fräsprozesses erkennt.

14. Fräsmaschine nach Anspruch 13,
wobei das künstliche Intelligenzmodul (4) einen trainierten lernfähigen Algorithmus während des Fräsprozesses ausführt.

15. Fräsmaschine nach Anspruch 13 oder 14,
wobei das künstliche Intelligenzmodul (4) der Fräsmaschine (1) dazu ausgelegt ist bei Erkennung von Anomalien während des Fräsprozesses eine Ausfallwahrscheinlichkeit und/oder einen voraussichtlichen Ausfallzeitraum der Fräsmaschine (1) zu berechnen und/oder mindestens eine mögliche Ursache für das Auftreten der Anomalien während des Fräsprozesses zu ermitteln.
